# EUROPEAN PATENT APPLICATION

(11) **EP 1 852 774 A2**
(43) Date of publication of application: **07.11.2007**
(21) Application number: 07007917.3
(22) Date of filing: 18.04.2007
(51) Int. Cl.: G06F 3/048, G06F 3/041

(54) **Method and system for emulating a mouse on a multi-touch sensitive surface**

(30) Priority: 03.05.2006 US 416719
(71) Applicant: MITSUBISHI ELECTRIC CORPORATION, Chiyoda-ku Tokyo 100-8310 (JP)
(72) Inventor: Esenther, Alan W., Ashland, Massachusetts 01721 (US); Ryall, Kathleen, Wayland, Massachusetts 01778 (US)
(74) Representative: Pfenning, Meinig & Partner GbR

(57) **Abstract**

A computer implemented method for emulating a mouse with a multi-touch sensitive display surface. Sensing a touching, movement or tapping by one or several fingers or fist emulates mechanical mouse functionality.
Sensing a first touching by a first finger at a first location on a multi-touch sensitive display surface and sensing concurrently a second touching by a second finger at a second location on the multi-touch sensitive display surface displays a graphic object on the multi-touch display surface at a position dependent on the first location and the second location to emulate moving a mouse.

## Description

### Field of the Invention

This invention relates generally to touch-sensitive display surfaces, and more particularly to emulating a mouse by touching a multi-touch sensitive display surface.

### Background of the Invention

With personal computers, there are two basic ways to control the movement of a cursor on a display screen: indirect and direct. In the most common way, a mouse or a finger on a touch pad is moved on a horizontal work surface, such as a tabletop, desktop or laptop, while the cursor moves on a vertical display surface. The input and display spaces are disjoint. With touch-sensitive direct-touch display surfaces, the cursor follows the movement of a finger or stylus in direct contact with the display surface, and is usually positioned directly under the contact point. The display space and the input space are the same space and are calibrated to coincide.

In cursor control, two modes are typically recognized for manipulating the cursor: positioning and engagement. Positioning mode simply moves the cursor over the displayed content without explicitly altering or actively interacting with the content, while engagement actively interacts with the content, e.g., moving a selected window or changing the appearance of the selected content. In a traditional desktop environment, positioning the cursor is typically done by moving the mouse; engagement is achieved by pressing one or more mouse buttons and possibly also moving the mouse. Typical operations in the engagement mode include dragging, i.e., moving the cursor with a mouse button depressed, and clicking and double-clicking, i.e., quickly pressing and releasing a mouse button once or multiple times.

Note that typically, while positioning may cause visual changes in the displayed contents, the changes are incidental to the movement of the cursor; the changes are temporary, provided by the system/application, and are intended as feedback for the user. For example, some graphical user interface (GUI) elements provide 'ToolTips' that are triggered by a mouse-over; when the cursor is placed over such an element, an information bubble is displayed. As another example, when the cursor is moved into and out of a GUI element, the element may change its visual appearance, e.g., highlighting and un-highlighting itself to indicate that it is an active element. It is not until or unless a mouse button is activated that engagement occurs.

One of the more fundamental challenges for direct-touch input is that users may wish to move a cursor across a touch-sensitive display without engaging any 'mouse' buttons, e.g., simply move the cursor over an icon. However, when a user touches a touch-sensitive surface, it is difficult for the system to detect whether the touch was intended to simply move the cursor or to interact with content, e.g., to 'drag' content with the cursor, as is done with indirect-control by holding down the left mouse button during the movement.

Thus, direct touch systems suffer from a different variant of the well known 'Midas touch' problem, i.e., every touch is significant, see Hansen, J., Andersen, A., and Roed, P., "Eye gaze control of multimedia systems," ACM Symposium on Eye Tracking Research & Applications, 1995.

It is instructive to consider how other touch surfaces deal with this problem, even though most are not designed for a large touch-sensitive display surfaces.

The touch pad found on most laptop computers usually also includes left and right mouse buttons. There is also a mechanism to switch between modes without using the buttons. A user can switch between moving the cursor and dragging the cursor by tapping once on the pad, and then quickly pressing down continuously on the pad to drag the cursor. This sequence is recognized as being similar to holding down the left mouse button with indirect-control.

A second problem on a touch-sensitive display surface is that it can be difficult to precisely position a cursor with a relatively 'large' fingertip because the finger can obscure the very exact portion of the display surface with which the user desires to interact.

This problem can be solved by offsetting the cursor from the touch location. However, this forfeits one of the big advantages of a direct input surface, that is, the ability to directly touch the displayed content to be controlled.

Some resistive or pressure-based touch-sensitive surfaces typically use the average of two consecutive finger touch locations as the displayed position of the cursor. Laptop touch pads provide a single point of input. However, these are indirect input devices, and they do not address the problems of fluidly switching between positioning and engagement mouse modes. In the case of a laptop touchpad, auxiliary buttons may be provided to address the issue of fluidly switching between modes, but this does not solve the problem of having to rely on additional indirect input devices.

U.S. Patent Application No. 11/048264, "Gestures for touch sensitive input devices," filed by Hotelling et al. on January 31, 2005, describes methods and systems for processing touch inputs for hand held devices from a single user. That system reads data from a multipoint sensing device such as a multipoint touch screen. The data pertain to touch input with respect to the multipoint sensing device and the data identify multipoint gestures. In particular, the systems described are typically held in one hand, while operated by the other hand. That system cannot identify and distinguish multiple touches by different users. That is, the system cannot determine if the person touching the screen is the same person holding the device or some other person. Because the device is hand held, the number of different gestures is severely limited.

One direct touch-sensitive surface U.S. Patent No. 6,670,561, "Coordinates input method," issued to Aoki on December 30, 2003 uses an average of two consecutive touch locations as the position of the cursor. However, with this particular technology it is not possible to detect whether one or multiple locations were simultaneously touched, which limits the usefulness of the device. For example, the device requires a dedicated onscreen 'right click mode' button to specify whether touches should be interpreted as left clicks or right clicks. This solution does not support positioning mode at all, avoiding the issue of how to emulate moving the cursor without holding down a button.

Another device uses a specially designed stylus, see U.S. Patent No. 6,938,221, "User Interface for Stylus-Based User Input," issued to Nguyen on August 30, 2005; and U.S. Patent No. 6,791,536, "Simulating Gestures of a Pointing Device using a Stylus and Providing Feedback Thereto," issued to Keely et al. on September 14, 2004. That device can detect 'hovering,' i.e., when the stylus is near the surface but not actually in contact with the surface. If the stylus is hovering, then the cursor is simply moved, i.e., positioned, and if the pen is in contact with the surface, then the cursor is dragged, i.e., engaged.

Right clicking is supported by holding a button on the stylus, by bringing the stylus in contact with the surface for an extended moment, or by selecting a 'right click' displayed menu icon to indicate that the next touch should be interpreted as a right click. It is the lack of the hovering state, as opposed to two others states of touching or not touching, which makes emulating both mouse positioning and engagement modes so difficult on most touch surfaces. In most cases, such devices support only one of the modes - either positioning or engagement, with no smooth transition between the two.

It is desired to emulate a mouse by touching a multi-touch sensitive display surface.

### Brief Description of the Drawings

Figure 1 is a schematic of a user interface using a multi-touch sensitive display surface according to an embodiment of the invention;

Figures 2A-2C are schematics of using multiple fingers on one hand to position a cursor according to an embodiment of the invention;

Figure 3 is a schematic of using multiple fingers to switch between cursor modes according to an embodiment of the invention;

Figure 4 is a schematic of using multiple fingers to drag a cursor according to an embodiment of the invention;

Figure 5 is a schematic of using multiple fingers on two hands to position a cursor according to an embodiment of the invention;

Figure 6 is a state diagram of principle states for emulating clicking or dragging with the left mouse button engaged on a multi-touch sensitive surface according to one embodiment of the invention;

Figure 7 is a state diagram of principle states for emulating clicking or dragging with the right mouse button engaged on a multi-touch sensitive surface according to one embodiment of the invention;

Figure 8 is a state diagram of principle states for emulating clicking or dragging with the middle mouse button engaged on a multi-touch sensitive surface according to one embodiment of the invention;

Figure 9 is a state diagram of principle states for emulating repositioning the mouse cursor with no mouse buttons engaged, and for emulating toggling the activation of the left mouse button on a multi-touch sensitive surface according to one embodiment of the invention; and

Figure 10 is a state diagram of principle states for emulating rotating a mouse wheel up or down on a multi-touch sensitive surface according to one embodiment of the invention.

### Detailed Description of the Preferred Embodiment

The embodiments of the invention emulate mouse-like control with a multi-touch sensitive display surface. As defined herein, position and positioning apply to a displayed cursor, and location and locating apply to touches on the surface. That is, the positioning is virtual and relates to displaying a cursor or other graphic objects in an image displayed on the surface. The locating is physical, and relates to the physical sensing of contacts by fingers or the whole hand. Note that the methods as described herein are applicable to any multi-touch touch-sensitive device. Our preferred embodiment uses the touch surface as a table, but an orientation of the surface could be any, e.g., wall, table, angled-surface.

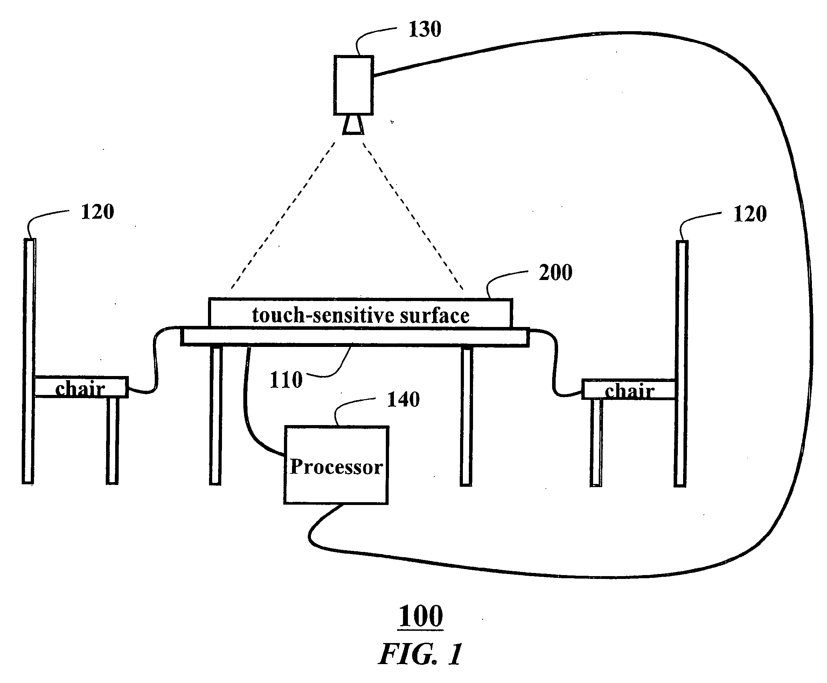

Figure 1 shows an example multi-modal, multi-touch sensitive graphic user interface 100 according to the embodiments of our invention. The example system includes a table 110 electrically connected to a multi-touch sensitive display surface 200, chairs 120, a projector 130, and a processor 140. When a user sitting in one of the chairs touches one or more locations on the display surface 200, a capacitive coupling occurs between the user and the locations touched on the surface. The locations are sensed by the processor and operations are performed according to the touched locations.

It is desired to emulate a hand operated 'mouse' by touching the surface directly, for example with one or more fingers, one or two hands, a fist and the like. It should be noted that the actions taken by the computer system depend on the underlying application programs that respond to the mouse events generated by the touching.

Multiple touches or gestures can be sensed concurrently for a single user or multiple users. It is also possible to identify particular users with the touches, even while multiple users touch the surface concurrently. Images are displayed on the surface by the projector 130 according to the touches as processed by the processor 140. The images include sets of graphic objects. A particular set can include one or more objects. The displayed objects can be items such as text, data, images, menus, icons, and pop-up items. In our preferred embodiment the touch-surface is front-projected; the display technology is independent of our interaction techniques. Our techniques can be used with any multi-touch touch-sensitive surface regardless of how the images are displayed.

We prefer to use a direct-touch display surface that is capable of sensing multiple locations touched concurrently by multiple users, see Dietz et al., "DiamondTouch: A multi-user touch technology," Proc. User Interface Software and Technology (UIST) 2001, pp. 219-226, 2001, and U.S. Patent No. 6,498,590 "Multi-user touch surface, issued to Dietz et al., on December 24, 2002, incorporated herein by reference. Hand gestures are described in U.S. Patent Application Sn. 10/659,180, "Hand Gesture Interaction with Touch Surface," filed by Wu et al., on September 10, 2003, incorporated herein by reference.

As a feature, the multi-touch sensitive display surface according to the invention does not require any ***physical buttons*** as found on a mouse, or other user interface.

Displayed graphic objects are controlled arbitrarily by touching the surface at or near locations where the objects are displayed. By controlling, we mean that the objects can be moved, dragged, selected, highlighted, rotated, resized, re-oriented, etc, as they would by a mechanical mouse. Re-orientation is defined as a translation and a rotation of the item with a single touching motion. The touching can be performed by fingers, hands, pointing or marking devices, such as a stylus or light pen, or other transducers appropriate for the display surface.

In order for mouse emulation to be smooth and natural on such a multi-touch sensitive display surface, a number of things are desired.

First, it is required to precisely position the cursor, a type of graphic object, on the display surface. This is a particular problem when fine positioning is attempted with a finger because the physical location of the finger typically obscures the virtual position of the cursor on the display surface.

Second, there must be a simple mechanism to switch between positioning mode, i.e., just moving the cursor, and engagement mode, i.e., dragging, or drawing.

Third, it is undesirable for this switching mechanism to require movement of the cursor itself. For example, after the cursor is moved to the display position that coincides with the physical location of the finger on the multi-touch sensitive surface, the cursor should remain at the same location during the switching.

Fourth, and perhaps most important, any solution for emulating mouse control should "feel" very easy and natural.

According to one embodiment of the invention, when a user touches the touch-sensitive surface with one finger, the system behaves as though a left mouse button is pressed. This facilitates a simple and intuitive behavior when the user is performing common operations such as scrolling, dragging, and drawing.

However, this makes it awkward to perform 'mouse-over' operations such as positioning the cursor to activate menu items, and tool tips, and image rollovers in web pages, wherein moving the cursor over images changes the appearance of the images. If the left mouse button is held down during what would normally be a mouse-over operation, then the text may become unexpectedly selected, for example.

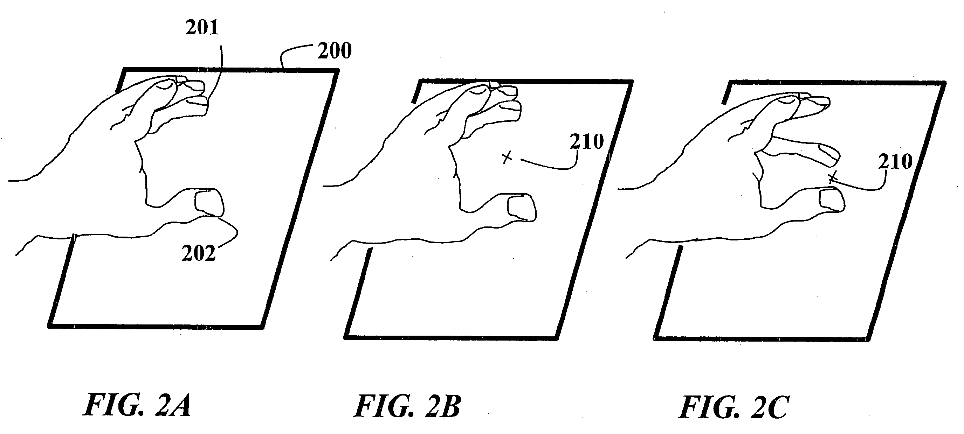

As shown in Figure 2A, when two fingers 201-202 touch the surface 200 concurrently, e.g., the middle finger and the thumb, the cursor 210 is displayed at a mid-point location between the positions of the two fingers as a graphic object, as shown in Figure 2B. This provides a view of the cursor that is not obscured by the fingers. Repositioning the fingers relocates the cursor accordingly. If the distance between the two fingers is increased or decreased, then the cursor will continue to be displayed at the mid-point location, as shown in Figure 2C.

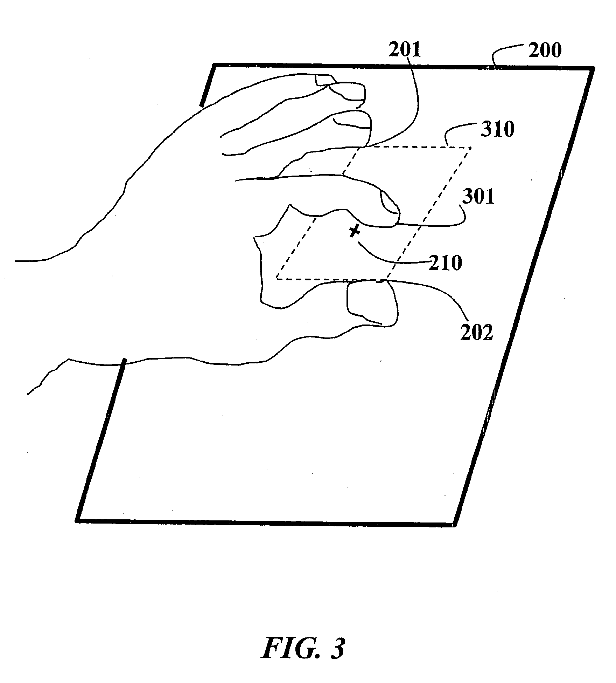

As shown in Figure 3, after the cursor 210 has been located, the user can tap the surface 200 with a third finger 301, e.g., the index finger, to simulate a left mouse press, i.e., holding the left mouse button down. This allows the user to smoothly switch between positioning and engagement modes, while positioning the cursor 210. It does not matter where the third finger taps. However, the active tapping area can be restricted to a rectangular bounding box 310 having opposing diagonal corners defined be the position of the two fingers 201-202. This technique enables the user to keep two fingers in contact with the surface while smoothly and accurately positioning the cursor, in a mouse-like manner.

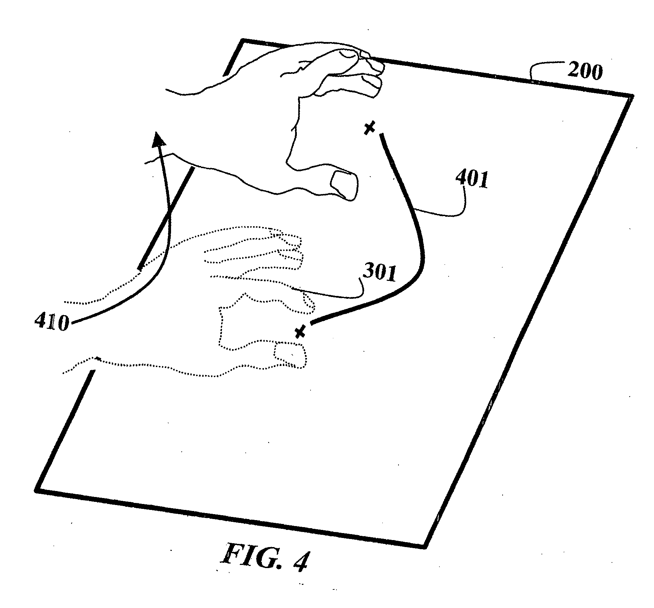

Figure 4 shows how the user can draw a line 401, which is another graphic object, by relocating the hand as indicated by the arrow 410. At the beginning of the movement, the user taps the surface with the third finger 301 to enable drawing mode, instead of just positioning the cursor. The completion of the 'move' is indicated by lifting the third finger, or by lifting all three fingers at about the same time.

In practice, it seems most natural to use the thumb and middle finger of one hand to enter the cursor positioning mode. This allows the index finger to be used for tapping in between the other two fingers.

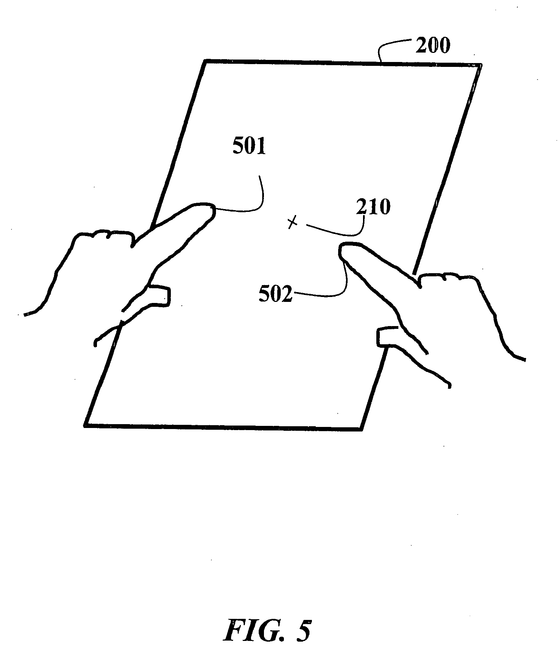

However, if the hand obscures the cursor or other displayed content, then the user can use two index fingers 501-502 to locate the cursor as shown in Figure 5. As an advantage, increasing the distance between the two fingers can increase the accuracy of the cursor positioning.

It seems to be most natural and stable for a human hand to use the thumb and middle finger of one hand to specify the cursor position. The two fingers tend to 'anchor' the touch, which is particularly important when trying to precisely position of the cursor.

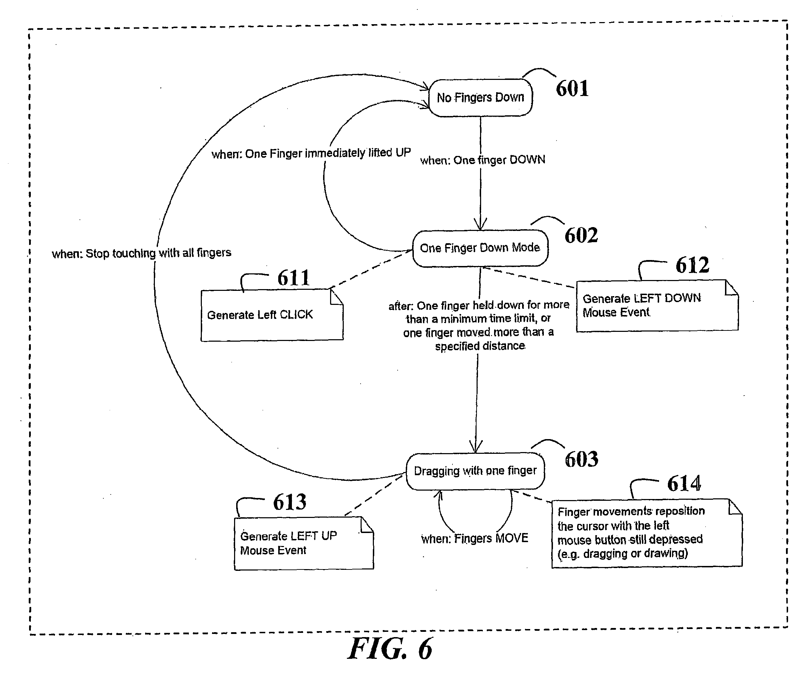

Figures 6-10 are state diagrams that emulate mouse-like events using a multi-touch display surface according to embodiments of the invention. The 'rounded boxes' indicate states, the rectangular boxes indicate the mouse-like events, and the directed arcs indicate self explanatory transitions between the various states.

To emulate clicking the left mouse button, the user simply taps quickly at a desired location. To emulate double-clicking with the left mouse button, the user simply taps twice quickly at the desired location.

Figure 6 shows the states that emulate mouse left clicking and dragging. The states are no fingers down 601, one finger down 602, and dragging with one finger 603. The events are left click 611, left button down 612, left button up 613, and dragging with the left button 614. When the finger is repositioned or 'dragged', while the finger remains in contact with the surface, the cursor is displayed at a location corresponding to the position finger, and the cursor *engages* with the displayed graphical object. The type of engagement depends of the underlying application. For example, when the graphical object is text in word processor, the engaging highlights the text, as would be the case if a mouse were used. If the object is the title bar of a 'window', the window is dragged along with the finger.

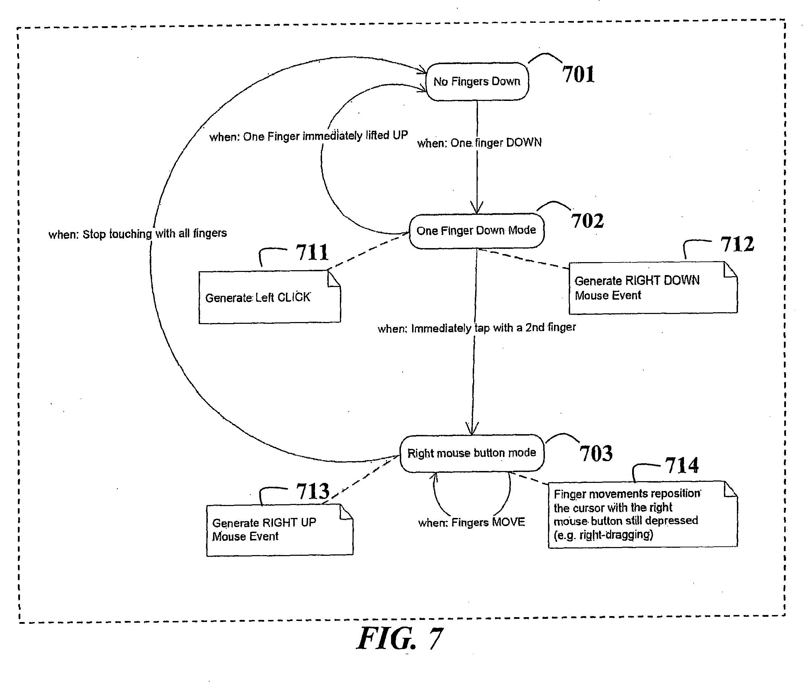

According to an embodiment, to emulate pressing down the right mouse button, the user presses one finger down on the surface at the desired location, and then immediately taps elsewhere (down and up) with a second finger at an arbitrary second location. Subsequently moving the first finger effectively emulates dragging with the right mouse button depressed. After the second finger has tapped the surface, when the user stops pressing with the first finger, the system will emulate releasing the right mouse button. To emulate a right-click (button pressed and then released), the user simply presses with a first finger at the desired click location, taps briefly with a second finger, and then releases (stops touching) with the first finger. The state diagram for single-clicking and dragging with the right mouse button is shown in Figure 7. The states are no fingers down 701, one finger down 702, and right mouse button mode 703. The events are left click 711, right button down 712, right button up 713, and dragging with the right button 714.

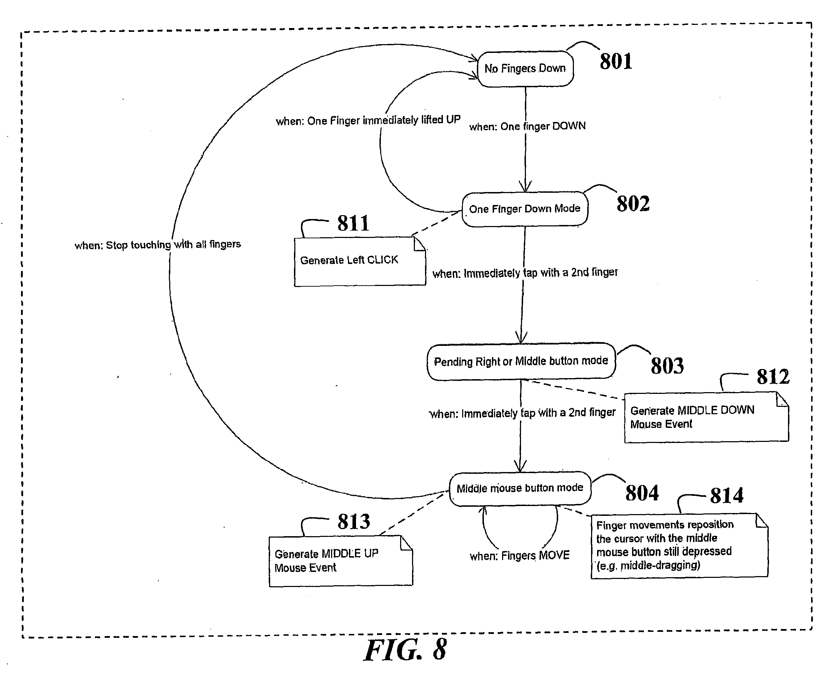

According to an embodiment, to emulate pressing down the middle mouse button, the user presses one finger down on the surface at the desired location, and then immediately taps twice elsewhere (down and up, but twice) with a second finger at an arbitrary second location. Subsequently moving the first finger will effectively emulate dragging with the middle mouse button depressed. After the second finger has tapped the surface twice, when the user stops pressing with the first finger, the system will emulate releasing the middle mouse button. To emulate a middle-click (button pressed and then released), the user simply presses with the first finger at the desired click location, taps briefly twice with the second finger, and then releases (stops touching) with the first finger. The state diagram for single-clicking and dragging with the middle mouse button is shown in Figure 8. The states are no fingers down 801, one finger down 802, pending right or middle button mode 803, and middle button mode 804. The events are left click, 811, middle button down 812, middle button up 813, and dragging with middle button 814.

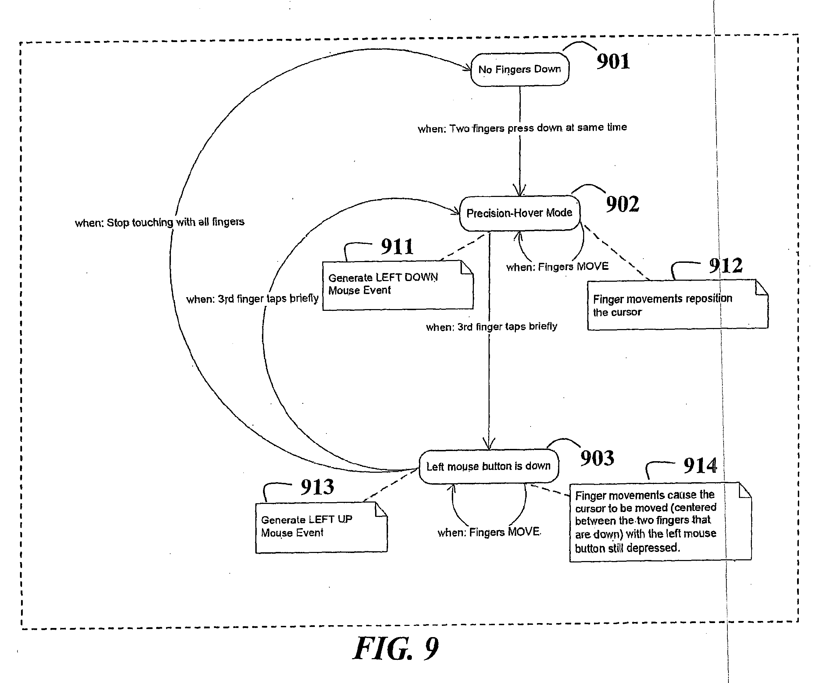

According to an embodiment, a user may emulate moving the mouse cursor, i.e. repositioning the mouse cursor with no mouse buttons engaged. To do this, starting, as shown in Figure 9 in with no fingers down 901, the user presses down on the surface with two fingers at the same time to enter Precision-Hover mode 902. This causes the cursor to move to the midpoint of the two fingers 912. Subsequently moving one or both fingers will cause the cursor to be continually repositioned such that it stays at the midpoint of the two fingers 912, without any mouse buttons being engaged. While in this mode, tapping with a third finger toggles the state of the left mouse button between being pressed 903 and released 902. The user may perform typical "left-dragging" operations such as dragging and drawing by moving either or both fingers while the left mouse button is down 903. The Precision-Hover mode 902 and the partner left-dragging mode 903 are exited when all of the user's fingers stop touching the surface 913.

Therefore, Figure 9 is a state diagram of principle states for emulating repositioning the mouse cursor with no mouse buttons engaged, and for emulating toggling the activation of the left mouse button on a multi-touch sensitive surface according to one embodiment of the invention. The states are no fingers down 901, Precision-Hover mode 902, and left mouse button is down mode 903. The events are left button down 911, finger movements reposition the cursor 912, left button up 913, and dragging with the left mouse button 914.

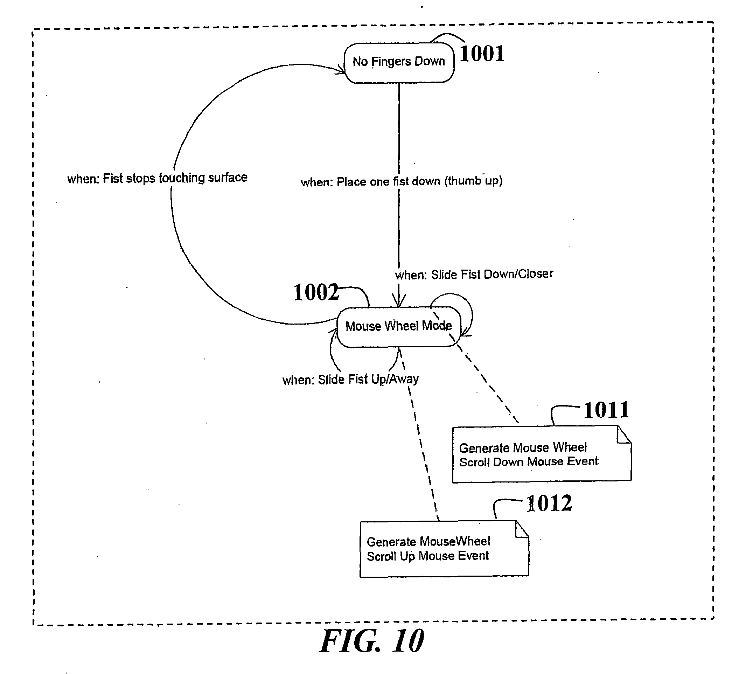

According to this embodiment of the invention, to emulate rotating a mouse wheel, the user presses one fist down on the surface, and then slides that fist up/away or down/closer to emulate scrolling the mouse wheel up or down. This embodiment relies on the fact that the system can determine a size of an area being touched. In this case, the area touched by a fingertip is substantially smaller than an area being touched by a closed fist. The ratio of sliding amount to resultant mouse wheel rotation amount may be configurable. This is shown in Figure 10. The states are no fingers down 1001, and mouse wheel mode 1002. The events are mouse wheel scroll down 1011, and mouse wheel scroll up 1012.

It is to be understood that various other adaptations and modifications may be made within the spirit and scope of the invention. Therefore, it is the object of the appended claims to cover all such variations and modifications as come within the true spirit and scope of the invention.

## Claims

1. A computer implemented method for emulating a mouse with a multi-touch sensitive display surface (200), comprising the steps of:
sensing a first touching by a first finger (201) at a first location on a multi-touch sensitive display surface;
sensing concurrently a second touching by a second finger (202) at a second location on the multi-touch sensitive display surface; and
displaying a graphic object on the multi-touch display surface at a position dependent on the first location and the second location.

2. The method of claim 1, in which the position is mid-point between the first location and the second location.

3. The method of claim 1, in which the first finger (201) is a middle finger and the second finger (202) is a thumb of the hand.

4. The method of claim 1, in which the first finger is a ring finger and the second finger is a thumb of the hand.

5. The method of claim 1, in which the graphic object is a cursor (210).

6. The method of claim 1, further comprising:
moving concurrently, the first finger (201) and the second finger (202) while touching the multi-touch display surface to change the first and second locations; and
displaying concurrently the graphic object at moving positions dependent on the moving first and second locations to emulate moving a mouse.

7. The method of claim 1, further comprising:
sensing concurrently a third tapping by a third finger (301) at a third location on the multi-touch sensitive display surface; and
switching between cursor control modes according to the third touching.

8. The method of claim 7, in which the cursor control modes emulate cursor positioning and engagement.

9. The method of claim 7, in which the first finger (201) is a middle finger of a hand, the second finger (202) is a thumb of the hand, and the third finger (301) is an index finger of the hand.

10. The method of claim 7, in which the first finger (201) is a ring finger of a hand, the second finger (202) is a thumb of the hand, and the third finger (301) is an index finger of the hand.

11. The method of claim 7, in which the sensing of the third location is restricted to a rectangular bounding box (310) having opposing diagonal corners defined be the first location and the second location.

12. The method of claim 6, in which the moving positions include an initial position and a last position, and the graphic object is a line (401) connecting the initial position and the last position.

13. The method of claim 6, in which the graphic object includes line segments connecting the moving positions.

14. The method of claim 1, in which the sensing is identified with a particular user.

15. A computer implemented method for emulating a mouse with a multi-touch sensitive display surface (200), comprising the steps of:
sensing a first touching by a first finger (201) at a first location on a multi-touch sensitive display surface while displaying a graphical object;
sensing a moving of the first finger while concurrently sensing a second touching by a second finger (202) at a second location on the multi-touch sensitive display surface; and
engaging with the graphic object according to the moving of the first finger to emulate a left click and drag operation of a mouse.

16. The method of claim 15, in which the graphical object is a document and the moving highlights a portion of the document.

17. The method of claim 15, in which the graphical object is a window and the moving rotates the window.

18. The method of claim 15, in which the graphical object is a window and the moving resizing the window.

19. A computer implemented method for emulating a mouse with a multi-touch sensitive display surface (200), comprising the steps of:
sensing a first touching by a first finger (201) at a first location on a multi-touch sensitive display surface while displaying a graphical object;
sensing tapping by a second finger (202) at a second location on the multi-touch sensitive display surface; and
engaging with the graphic object according to the location of the first finger to emulate a right button press operation of a mouse.

20. The method of claim 19 comprising the subsequent steps of:
sensing the movement of the first finger (201) touching the multi-touch sensitive device; and
engaging with the graphic object according to the location of the first finger to emulate a mouse operation of dragging with a right mouse button engaged.

21. The method of claim 19 comprising the subsequent steps of:
sensing a cessation of the first finger (201) from touching the multi-touch sensitive device; and
engaging with the graphic object according to the location of the first finger to emulate a right button release operation of the mouse.

22. A computer implemented method for emulating a mouse with a multitouch sensitive display surface (200), comprising the steps of:
sensing a first touching by a first finger (201) at a first location on a multi-touch sensitive display surface while displaying a graphical object;
sensing two consecutive touchings by a second finger (202) at a second location on the multi-touch sensitive display surface; and
engaging with the graphic object according to the location of the first finger to emulate a middle button press operation of the mouse.

23. The method of claim 22 comprising the subsequent steps of:
sensing the movement of the first finger (201) touching the multi-touch sensitive device; and
engaging with the graphic object according to the location of the first finger to emulate a mouse operation of dragging with the middle mouse button engaged.

24. The method of claim 22 comprising the subsequent steps of:
sensing a cessation of the first finger (201) from touching the multi-touch sensitive device; and
engaging with the graphic object according to the location of the first finger to emulate a middle button release operation of the mouse.

25. A computer implemented method for emulating a mouse with a multi-touch sensitive display surface (200), comprising the steps of:
sensing a first touching by a fist at a first location on a multi-touch sensitive display surface while displaying a graphical object;
sensing a moving of the fist while touching the multi-touch sensitive display surface while displaying a graphical object; and
engaging with the graphic object according moving to emulate a scrolling with mouse wheel.

26. A system for emulating a mouse, comprising:
a multi-touch sensitive display surface (200) configured to sense a first touching by a first finger (201) at a first location and a concurrent second touching by a second finger (202) at a second location on the multi-touch sensitive display surface; and
means for displaying a graphic object (210) on the multi-touch display surface at a position dependent on the first location and the second location to emulate moving a mouse.
